**Europäisches Patentamt**

**European Patent Office**

**Office européen des brevets**

(19)

(11) Publication number : **0 122 797 B2**

(12) # NEW EUROPEAN PATENT SPECIFICATION

(45) Date of publication of the new patent specification : **18.05.94 Bulletin 94/20**

(51) Int. Cl.⁵ : **C08F 220/54,** A01G 1/00

(21) Application number : **84302554.5**

(22) Date of filing : **13.04.84**

(54) **Process for producing granular, water-swellable crosslinked acrylic copolymer, and its use.**

(30) Priority : **14.04.83 JP 64469/83**
**16.09.83 JP 169219/83**
**11.10.83 JP 188427/83**

(43) Date of publication of application :
**24.10.84 Bulletin 84/43**

(45) Publication of the grant of the patent :
**15.07.87 Bulletin 87/29**

(45) Mention of the opposition decision :
**18.05.94 Bulletin 94/20**

(84) Designated Contracting States :
**DE FR GB**

(56) References cited :
**EP-A- 0 037 138**
**DE-A- 1 617 998**
**DE-A- 2 737 941**
**DE-A- 3 228 121**
**US-A- 2 982 749**
**US-A- 3 686 024**
**US-A- 4 283 517**

(73) Proprietor : **MITSUI PETROCHEMICAL INDUSTRIES, LTD.**
**2-5, Kasumigaseki 3-chome Chiyoda-ku Tokyo 100 (JP)**

(72) Inventor : **Honda, Narimichi**
**4-8, Waki 2-chome Waki-cho**
**Kuga-gun Yamaguchi-ken (JP)**
Inventor : **Wakumoto, Hiroshi**
**7-20, Iwakuni 2-chome**
**Iwakuni-shi Yamaguchi-ken (JP)**
Inventor : **Nakano, Takayuki**
**2-3, Misono 1-chome**
**Ohtake-shi Hiroshima-ken (JP)**
Inventor : **Ueki, Hiromi**
**2-3, Shozoku-cho 3-chome**
**Iwakuni-shi Yamaguchi-ken (JP)**
Inventor : **Hiratsuka, Jyunzo**
**2-5, Muronoki-cho 1-chome**
**Iwakuni-shi Yamaguchi-ken (JP)**

(74) Representative : **Myerscough, Philip Boyd et al**
**J.A.KEMP & CO. 14, South Square Gray's Inn London WC1R 5LX (GB)**

EP 0 122 797 B2

## Description

This invention relates to a process for producing a granular, water-swellable crosslinked acrylic copolymer. Particularly, this invention relates to a process for producing a granular, water-swellable crosslinked acrylic copolymer which has excellent water swellability, shape retention (water insolubility) and transparency, shows excellent performance in its use as artificial soil in regard to water retention, root holding property, air holding property and ornamental property, and is particularly useful as artificial soil in hydroponics.

Granular water-swellable crosslinked acrylic copolymers derived from acrylic amide monomers and acrylic crosslinkable comonomers have been used, for example, as artificial soil, such as artificial soil in hydroponics, or a soil conditioner. In any of these applications, the copolymers are required to have good water swellability. For use as artificial soil in hydroponics, they are also required to have high transparency to provide ornamental characteristics.

JP-A-145908/1981 (laid open on November 13, 1981) relates to a water-exchangeable nontoxic polymeric material derived from an acrylic amide monomer and an acrylic crosslinkable comonomer and a process for its production. The polymeric material is stated to be useful as artificial soil which, for example, serves to make barren lands such as desert or to stabilize soil used for concentrated cultivation, for example soil in greenhouses and pots for flower and other plants.

This document discloses a process for producing a water-exchangeable nontoxic water-insoluble polymeric material by copolymerizing acrylamide and N,N'-methylene-bisacrylamide under controlled conditions, which comprises (1) dissolving acrylamide and N,N'-methylene-bisacrylamide together in water with the maximum weight ratio of the monomers to water being kept at 2:8, (2) optionally adding an N-substituted acrylamide monomer further so that the weight ratio of the monomers to water does not exceed said maximum ratio, (3) adding at least one finely pulverized polymerization initiator, suspended and/or dissolved, while stirring the resulting aqueous solution, (4) copolymerizing the monomers at a temperature higher than 50°C, (5) granulating the resulting gel and washing the granules to a maximum acrylamide monomer content of not more than 0.1% by weight based on the weight of the final product, and (6) drying the granules at a temperature lower than 100°C to a maximum moisture content of 12% by weight based on the final product, and thus completely copolymerizing and curing the granules. The weight ratio of the acrylamide to N,N'-methylene-bisacrylamide exemplified is from 9:1 to 99:1.

Hot air drying at 95±5°C is recommended in the above patent document, but the patent document does not refer to drying at more than 100°C and is completely silent on heat treatment in the presence of water under substantially sealed conditions.

The water swellability of the granular, water-swellable crosslinked acrylic copolymer obtained by the process of this Japanese patent document is not high enough to be satisfactory, and is still desired to be improved. Particularly, the product of this prior art does not have fully satisfactory performance as artificial soil, especially for hydroponics.

We have made extensive investigations in order to provide a granular, water-swellable crosslinked acrylic copolymer derived from an acrylic amide monomer and an acrylic crosslinkable comonomer which is useful as artificial soil and can overcome the difficulties of the prior acrylic copolymers discussed above.

According to the invention there is provided a process for producing a granular, water-swellable crosslinked acrylic copolymer, which comprises copolymerizing in an aqueous medium in the presence of a radical polymerization initiator a monomeric mixture comprising (a) at least one acrylic amide monomer selected from acrylamide, methacrylamide and N-methyl substitution products of these amides and (b) at least one acrylic crosslinkable comonomer selected from N,N'-alkylene- or arylene-bisacrylamides, N,N'-alkylene- or ($C_6$) arylene bismethacrylamides, alkylene-bisacrylates, alkylene-bismethacrylates, alkylene glycol-bisacrylates, polyalkylene glycol-bisacrylates, alkylene glycol-bismethacrylates and polyalkylene glycol-bismethacrylates, the proportion of the comonomer (b) being 0.01 to 5 moles per 100 moles of the acrylic amide monomer (a), forming a granular copolymer and drying the resulting granular copolymer characterized by (i) drying the resulting granular polymer at a temperature of 105 to 150°C, or (ii) heat-treating the resulting granular copolymer in the presence of moisture under substantially sealed conditions at a temperature of 100 to 160°C.

The granular water-swellable crosslinked acrylic copolymer produced in this way is free from the aforesaid difficulties, has excellent water-swellability, shape retention and transparency, and shows excellent performance as artificial soil, especially for hydroponics, with regard to water holding property, root holding property, air holding property and ornamental characteristics. A granular product can be formed in the process of the invention by, for example, granulating a resulting copolymer into a desired granular form after the copolymerization or by performing the copolymerization under such conditions as to form the desired granular copolymer. Thereafter the granular copolymer is either (i) dried at a temperature of 105 to 150°C (under non-sealed conditions), or (ii) heat-treated in the presence of moisture at 100 to 160°C under substantially sealed conditions and as desired, further drying the product at a temperature of, for example, 40 to 150°C (under non-sealed conditions).

Specific examples of the monomer (a) include acrylamide, methacrylamide and such N-methyl substitution products thereof as N-methylacrylamide, N,N-diethylacrylamide, N-methylmethacrylamide and N,N-dimethylmethacrylamide. The use of acrylamide and/or methacrylamide is preferred as the monomer (a).

Specific examples of the comonomer (b) include N,N'-(C$_1$-C$_6$)alkylene- or (C$_6$)arylene-bisacryl- or bismethacryl-amides such as N,N'-methylenebis(meth)acrylamide, N,N' - ethylenebis(meth)acrylamide, N,N' - propylenebis(meth)acrylamide, N,N' - hexamethylenebis(meth)acrylamide and N,N' -phenylenebis(meth)acrylamide; (C$_2$-C$_6$)alkylene-bisacrylates or bismethacrylates such as ethylenebis(meth)acrylate, propylenebis-(meth)acrylate and hexamethylenebis(meth)acrylate; and polyalkylene glycol-bisacrylates or bismethacrylates having a molecular weight of 214 to 5,000, such as diethylene glycol bis(meth)acrylate, triethylene glycol bis(meth)acrylate and polyethylene glycol bis(meth)-acrylate.

Of these, N,N'-methylene-bis(meth)acrylamide, N,N'-methylene-bisacrylate and N,N'-methylenebismethacrylate are preferred.

In the present invention, the aforesaid monomeric mixture may contain a minor amount of (c) an unsaturated monomer copolymerizable with the monomer (a) and the comonomer (b). Examples of the other monomer (c) are acrylic acid, methacrylic acid, maleic acid, functional derivatives of these acids such as their acid anhydrides, salts and esters (e.g., lower alkyl esters), vinyl acetate, styrene, methylstyrene and vinyltoluene. The monomeric units of this type may also be introduced by other means than copolymerization, for example by hydrolysis.

In order to impart protection from algae, mold-proofness and coloration to the granular, water-swellable crosslinked acrylic copolymer obtained in this invention, it is possible to add (d) an unsaturated monomer component, such as an anti-algal unsaturated monomer (e.g., a vinyl bond-containing triazine-type derivative and a vinyl bond-containing organotin compound, a moldproof unsaturated monomer or a coloring unsaturated monomer. Specific examples of the monomer (d) include 4-(N-acryloyl-N-ethyl)amino-6-isopropylamino-2-methylthio-s-triazine, 4-(N-acryloyl-N-ethyl)amino-2-chloro-6-s-triazine, 4-(N-acryloyl-N-ethyl)amino-2-chloro-6-isopropylamino-s-triazine, chlorodibutyltin acrylate, tributyltin acrylate, 6-methylamino-5-[4-$\alpha$-bromoacryloylamino-2-sulfo]azonaphthalene-2-sulfonic acid, 4 - (3 - acryloylamino - phenylamino) - 1 - amino - anthraquinone - 2 - sulfonic acid, 1 -acryloyl - amino - 4 - phenylaminoanthraquinone, and 1 - acryloylamino - 4 - phenylamimidoanthraquinone.

In the monomeric mixture to be copolymerized by the process of this invention, the proportion of the acrylic crosslinkable comonomer (b) is 0.01 to 5 moles, preferably 0.05 to 3 moles, per 100 moles of the acrylic amide monomer (a). If the proportion of the comonomer (b) is smaller than the lower limit specified above, the resulting water-swellable crosslinked acrylic copolymer becomes too soft. When such a copolymer is used as artificial soil particularly for hydroponics, its ability to hold plants is reduced. On the other hand, too large a proportion of the comonomer (b) beyond the upper limit specified reduces the transparency of the resulting water-swellable crosslinked acrylic copolymer and degrades its ornamental characteristics.

The amount of the monomer (c) which may further be included in the monomeric mixture is up to 60 moles, for example 0.01 to 60 moles, preferably up to 40 moles, for example 1 to 40 moles, per 100 moles of the monomer (a). The amount of the monomer (d) which may further be included in the monomeric mixture is up to 15 moles, for example 0.01 to 15 moles, preferably up to 10 moles, for example 0.01 to 10 moles.

In the present invention, the monomeric mixture comprising the acrylic amide monomer (a) and the acrylic crosslinkable monomer (b) and if required, the monomer (c) and/or the monomer (d) is copolymerized in an aqueous medium in the presence of a radical polymerization initiator.

The radical polymerization initiator may be a water-soluble radical polymerization initiator such as ammonium persulfate, potassium persulfate and sodium persulfate. Two or more of these initiators may be used in combination. The amount of the radical polymerization initiator may be properly selected. For example, it is about 0.001 to about 10 moles, preferably about 0.01 to about 5 moles, per 100 moles of the monomer (a). As required, an amine may be used in combination with the radical polymerization initiator in accordance with a technique known *per se*. Examples of such amines are triethanolamine and 3-dimethylaminopropionitrile. The amount of the amine is, for example, 0.1 to 30 moles per mole of the radical polymerization initiator.

The copolymerization reaction may be carried out while the monomeric mixture is in the form of an aqueous solution, or while forming an aqueous dispersion by stirring a mixture of an aqueous solution of the monomeric mixture and a solvent inducing phase separation from the aqueous solution under the polymerization conditions. An oil-soluble polymerization initiator such as azobisisobutyronitrile or benzoyl peroxide may also be used as the polymerization initiator in the above process. The "copolymerization in an aqueous medium", as referred to in the present invention, is meant to include copolymerization in the above-exemplified aqueous dispersion.

The amount of water may be properly selected in performing the copolymerization reaction, and may be any desired amount capable of forming an aqueous solution of the monomeric mixture. For example, it is 100 to 5,000 parts by weight, preferably 200 to 5,000 parts by weight, per 100 parts by weight of the monomeric mixture. The polymerization temperature may be properly selected, and is, for example, 10 to 150°C, preferably 50 to 100°C. The polymerization time may be properly chosen, and is, for example, 1 to 600 minutes, preferably 3 to 300 minutes.

In the process of this invention, granules in the desired shape are formed by, for example, granulating the resulting copolymer into the desired shape after the copolymerization, or by performing the copolymerization under such conditions as to form a copolymer of a desired granular shape. The granules may be in the shape of a solid cylinder, a prism (a regular prism, a right prism, a triangular prism, a tetragonal prism, a pentagonal prism, a hexagonal prism, etc.), a cone, a pyramid, a sphere, a hollow cylinder, or a hollow prism.

The granules may be formed by using suitable methods which can give granules of the desired shapes. Some of the examples are given below.

(1) A method which comprises polymerizing a starting aqueous solution containing the monomeric mixture and the radical polymerization initiator by passing it through a tube of a desired shape under heat, extruding the resulting water-swellable gel-like crosslinked copolymer, and cutting the polymer with a cutter to give granules having various prismatic shapes. The surface of the cutter and the inside surface of the polymerization tube may be coated with a fluorine-containing resin such as polyfluoroethylene polymers in order to improve the lubricity of the gel-like crosslinked copolymer.

(2) A method which comprises polymerizing the starting aqueous solution by passing it through the tube, extruding the resulting water-swellable gel-like crosslinked copolymer through a mesh-like blade of the desired shape to obtain prismatic granules, and cutting the granules with a cutter to obtain granules of various prismatic shapes. The surface of the mesh-like blade and the inside surface of the polymerization tube may be coated as in (1).

(3) A method comprising polymerizing the starting aqueous solution in bulk, and cutting the resulting ingot to form granules of the desired shape.

(4) A method which comprises polymerizing the starting aqueous solution into a plate form, and cutting it by a mesh-like blade or a cutter to obtain the desired shape.

(5) A method which comprises polymerizing the starting aqueous solution on a belt conveyor having a polymerization mold of the desired shape.

(6) A method which comprises stirring a mixture composed of the starting aqueous solution and a solvent capable of inducing phase separation from the aqueous solution under the polymerization conditions, thereby to obtain nearly spherical granules. The shape and size of the water-swellable gel-like crosslinked copolymer may be varied by changing the type and amount of the solvent, the stirring conditions, the temperature, etc.

In addition, the resulting water-swellable gel-like crosslinked copolymer is pulverized to form a powdery or granular polymer according to the purpose of use.

The granular copolymer as referred to in this invention, is meant to denote all products obtained by the techniques exemplified above.

In the present invention, the resulting granules may be
(i) dried (under non-sealed conditions) at a temperature of 105 to 150°C, or
(ii) heat-treated at 100 to 160°C under substantially sealed conditions in the presence of water. As desired, the heat-treated granules may further be dried (under non-sealed conditions) at a temperature of, for example, 40 to 150°C.

In the embodiment (i), it is desirable to increase the conversion in the copolymerization reaction in order to obtain a crosslinked copolymer having excellent water swellability and transparency. Preferably, there is used a copolymer obtained by performing the copolymerization until the polymerization conversion reaches preferably at least 80%, especially preferably at least 85%.

In the embodiment (i), the water-swellable gel-like crosslinked copolymer is dried at a temperature of 105 to 150°C, preferably 110 to 150°C, more preferably 110 to 140°C. If the drying temperature is too low beyond the above-temperature range (for example, when it is 100°C or less), the water swellability of the polymer is reduced. If it is too high, the transparency of the polymer is very much reduced. Accordingly, the temperature specified above is employed.

The drying treatment may be carried out at a temperature of 105 to 150°C by any desired means capable of producing a drying effect. For example, known drying means such as hot air drying and infrared ray drying may be properly carried out. The drying is carried out under non-sealed conditions in which drying is effected.

In the embodiment (ii), the water-swellable gel-like crosslinked copolymer is heat-treated at a temperature of 100 to 160°C, preferably 110 to 150°C, under substantially sealed conditions in the presence of moisture.

If the heat-treatment in the presence of water is carried out at a temperature lower than the above-specified limit, no satisfactory improvement in water swellability is obtained. If, on the other hand, the temperature is higher than the upper limit specified, the copolymer is degenerated considerably and becomes unsuitable for use as artificial soil in hydroponics.

The heat-treatment in the presence of moisture can be carried out by suitable means which do not produce a dry condition with a substantial loss of moisture. Some examples are shown below.

(1) A method which comprises heat-treating the water-swellable gel-like crosslinked copolymer in the swollen state under substantially sealed conditions in a container.

(2) A method which comprises partially dehydrating and drying the water-swellable gel-like crosslinked copolymer and thereafter heat-treating it under substantially sealed conditions in a container.

(3) A method which comprises completely dehydrating and drying the water-swellable gel-like crosslinked copolymer to give a water-swellable crosslinked copolymer, adding water, and then heat-treating the copolymer under substantially sealed conditions in a container.

In any of such methods, the heat-treatment may be carried out under such conditions that moisture is not lost from the vapor or liquid phase. According to the methods (1) and (2), the gel-like crosslinked copolymer may be directly heat-treated because it contains water. As a matter of course, the heat-treatment may be carried out after adding water. According to the method (3), water is added to the water-swellable crosslinked copolymer prior to heat-treatment. The amount of water to be present may be at least about 0.1 part by weight, per 100 parts by weight of the water-swellable crosslinked copolymer in the dry state.

The heat-treatment may be carried out under such substantially sealed conditions that moisture contained in the water-swellable gel-like copolymer is not lost in substantial amounts by evaporation, for example in a sealed vessel such as a sealed tube or autoclave. At this time, the heat-treatment may also be carried out in such an atmosphere as argon, helium, carbon dioxide gas, steam, etc. The heat-treatment time can be properly selected, and is, for example, about 3 to about 600 minutes, preferably about 10 to about 300 minutes.

In the heat-treatment method (2), the temperature at which the partial dehydration and drying is carried out before the heat-treatment is not particularly limited, and may, for example, be about 40 to about 150°C, preferably 60 to 140°C.

As required, the heat-treated water-swellable crosslinked polymer may be dried. The drying temperature at this time is usually 40 to 150°C, preferably 60 to 140°C.

The water-swellable crosslinked polymer obtained by the process of this invention has excellent water swellability, shape retention and transparency and can be used in various applications in the shapes exemplified hereinabove. Depending upon its end uses, it may be pulverized in a powdery or granular form after the drying treatment.

The water-swellable crosslinked acrylic copolymer which can be produced as above has a water swelling ratio of usually at least 65, preferably 70 to 800.

The water swelling ratio, as used herein, is determined as follows:-

A fixed weight ($W_1$ g) of the dry copolymer is sampled, and immersed in deionized water at 24°C for 24 hours. Then, the copolymer is poured onto a wire gauze having a size of 100 mesh to remove the excess of water. Then, the weight ($W_2$ g) of the swollen gel-like polymer is measured. The water swelling ratio is calculated in accordance with the following equation.

$$\frac{W_2 - W_1}{W_1}$$

The water-swellable crosslinked acrylic copolymer in granular form obtained by the process of this invention is especially useful as artificial soil in agriculture and horticulture, and above all as artificial soil in hydroponics.

The artificial soil for hydroponics in accordance with this invention is suitable for growing various plants, particularly ornamental plants, because it has good transparency, air holding property, water holding property and root holding property. Furthermore, since it permits good observation of the state of growth of roots, it is also suitable for growing plants in order to test an observing germination and growth of plants, the growing of roots, etc. Suitably, hydroponics on this artificial soil may be practiced in transparent pots, planters and other suitable receptacles made of glass, polystyrene, polymethyl methacrylate or polyolefins.

The hydroponical technique itself is well known, and may be practiced except that the artificial soil of this invention is used. For example, it is possible to sow seeds, plant bulbs and tubers, or transplant seedlings or grow plants in the artificial soil of this invention swollen with water. As required, water used for this purpose may contain suitable amounts and suitable concentrations of fertilizer components such as N, PL and K. For example, the Hogland solution may be dissolved in the water used. At times, a coloring agent may be dissolved in water to provide a greater ornamental effect.

The following examples illustrate the present invention more specifically.

Examples 1 to 8

In each run, a uniform starting solution of the composition shown in Table 1 was continuously fed into a tubular polymerization device of Teflon® having an inside diameter of 7 mm and a length of 300 mm, and polymerized at a temperature of 90°C for a period of 8 minutes. The resulting water-swollen gel-like crosslinked copolymer in the form of a strand having a diameter of 7 mm was continuously cut to a length of 7 mm. The pellets of the copolymer were washed in flowing water for 8 hours to remove the monomers remaining in the copolymer. The washed pellets of the copolymer were dried for 8 hours in a hot air dryer kept at each of the temperatures indicated in Table 1. The physical properties of the resulting semi-transparent pelletized water-swellable crosslinked copolymer are shown in Table 1.

The pellets of the copolymer were dipped in water containing a diluted liquid fertilizer (Hogland solution) to obtain a transparent water-swollen gel-like crosslinked copolymer containing the fertilizer. The swollen gel-like crosslinked copolymer (400 ml) was put in a glass bowl with a diameter of 130 mm and a height of 140 mm, and about 10 cm tall seedlings of begonia and saintpaulia were transplanted in the swollen copolymer in the bowl. They were grown in a well sunlit room while occasionally supplying a diluted aqueous solution of the liquid fertilizer. Four months later, these plants were growing in good condition.

EP 0 122 797 B2

TABLE 1

| Example | Composition of the starting solution | | | | | | | | Drying temperature (°C) | Properties of the resulting copolymer | |
|---|---|---|---|---|---|---|---|---|---|---|---|
| | (Meth)acryl-amide (a) | (% by weight) | Crosslinkable monomer | (% by weight) | Radical polymerization initiator | (% by weight) | Water (% by weight) | | | Density (g/cm$^3$) | Water swelling ratio (*) |
| 1 | Acrylamide | 98.0 | N,N′-methylene-bisacrylamide | 2.0 | Ammonium persulfate | 0.1 | 900 | | 120 | 1.30 | 117 |
| 2 | „ | 99.0 | „ | 1.0 | „ | 0.1 | 900 | | 120 | 1.30 | 138 |
| 3 | „ | 99.6 | „ | 0.4 | „ | 0.1 | 900 | | 120 | 1.29 | 175 |
| 4 | „ | 99.8 | „ | 0.2 | „ | 0.1 | 900 | | 120 | 1.29 | 295 |
| 5 | „ | 98.0 | „ | 2.0 | „ | 0.1 | 900 | | 140 | 1.29 | 104 |
| 6 | „ | 99.0 | „ | 1.0 | „ | 0.1 | 900 | | 140 | 1.29 | 144 |
| 7 | „ | 99.6 | „ | 0.4 | „ | 0.1 | 900 | | 140 | 1.29 | 188 |
| 8 | „ | 99.8 | „ | 0.2 | „ | 0.1 | 900 | | 140 | 1.29 | 310 |

(*) When swollen with water, all the copolymers became transparent water-swollen gels.

Examples 9 to 16

In each run, a uniform starting solution of the composition indicated in Table 2 was polymerized, washed in flowing water for 8 hours, and dried for 8 hours in a hot air dryer kept at each of the temperatures shown in Table 2, in the same way as in Example 1. The physical properties of the resulting semi-transparent pelletized water-swellable crosslinked polymer are summarized in Table 2.

8

EP 0 122 797 B2

TABLE 2

| Example | Composition of the starting solution | | | | | | | Drying temperature (°C) | Properties of the resulting copolymer | |
|---|---|---|---|---|---|---|---|---|---|---|
| | (Meth)acryl-amide | (% by weight) | Crosslinkable monomer (b) | (% by weight) | Radical polymerization initiator | (% by weight) | Water (% by weight) | | Density (g/cm$^3$) | Water swelling ratio (*) |
| 9 | Acrylamide | 98.0 | N,N'-methylene-bisacrylamide | 2.0 | Ammonium persulfate | 0.1 | 900 | 80 | 1.29 | 19.6 |
| 10 | '' | 99.0 | '' | 1.0 | '' | 0.1 | 900 | 80 | 1.29 | 24.9 |
| 11 | '' | 99.6 | '' | 0.4 | '' | 0.1 | 900 | 80 | 1.29 | 39.6 |
| 12 | '' | 99.8 | '' | 0.2 | '' | 0.1 | 900 | 80 | 1.29 | 42.1 |
| 13 | '' | 98.0 | '' | 2.0 | '' | 0.1 | 900 | 100 | 1.29 | 45.3 |
| 14 | '' | 99.0 | '' | 1.0 | '' | 0.1 | 900 | 100 | 1.29 | 49.2 |
| 15 | '' | 99.6 | '' | 0.4 | '' | 0.1 | 900 | 100 | 1.29 | 55.7 |
| 16 | '' | 99.8 | '' | 0.2 | '' | 0.1 | 900 | 100 | 1.29 | 59.6 |

(*) When swollen with water, all the copolymers became transparent water-swollen gels.

Examples 17 to 19

In each run, a uniform starting solution of the composition shown in Table 3 was polymerized, washed in flowing water for 8 hours, and dried at 160°C for 8 hours in a hot air dryer in the same way as in Example 1. The polymer, however, foamed in popcorn form. When immersed in water, the popcorn-like water-swellable cross-linked polymer absorbed water and became a water-swollen gel-like crosslinked polymer. But this gel became whitely turbid over a broad range, and contained many bubbles. Its appearance was therefore markedly impaired. The water swelling ratio of the water-swollen crosslinked polymer is shown in Table 3.

TABLE 3

| Example | Composition of the starting solution | | | | | | | | Water swelling ratio |
|---|---|---|---|---|---|---|---|---|---|
| | (Meth)acrylamide (a) | (% by weight) | Crosslinkable monomer (b) | (% by weight) | Radical polymerization initiator | (% by weight) | Water (% by weight) | | |
| 17 | Acrylamide | 98.0 | N,N'-methylene-bisacrylamide | 2.0 | Ammonium persulfate | 0.1 | 900 | | 92 |
| 18 | " | 99.0 | " | 1.0 | " | 0.1 | 900 | | 130 |
| 19 | " | 99.6 | " | 0.4 | " | 0.1 | 900 | | 160 |

Example 20

Acrylamide (88 g),3 g of acrylic acid and 2.0 g of N,N-methylene-bisacrylamide were dissolved in 900 g of water, and 0.1 g of ammonium persulfate was dissolved in it to form a uniform solution. The solution was continuously fed into a tubular polymerization device of Teflon® having an inside diameter of 7 mm and a length of 300 mm, and polymerized at 90°C for 10 minutes. The resulting water-swollen gel-like crosslinked polymer in the form of a strand having a diameter of 7 mm was cut continuously to a length of 7 mm. The resulting water-swollen gel-like crosslinked polymer was washed in flowing water for 8 hours to remove the monomers remaining in the copolymer. After washing, the water-swollen gel-like crosslinked polymer was dried at 125°C for 15 hours in a hot air dryer. The resulting semi-transparent pelletized water-swellable crosslinked polymer had a water swelling ratio of 120.

Example 21

A uniform starting solution having the same composition as in Example 20 was polymerized in the same way as in Example 20, washed in flowing water for 8 hours, and then dried at 60°C in a hot air dryer. The resulting semi-transparent pelletized water-swellable crosslinked polymer had a water swelling ratio of 80.

Examples 22 to 24

In each run, a uniform starting solution of the composition shown in Table 4 was continuously fed into a tubular polymerization device of Teflon® having an inside diameter of 7 mm and a length of 300 mm, and polymerized at 90°C for 8 minutes. The resulting water-swollen crosslinked polymer in the form of a strand having a diameter of 7 mm was continuously cut to a length of 7 mm. The resulting pellets of the water-swollen gel-like crosslinked copolymer were washed in flowing water for 8 hours to remove the monomers remaining in the water-swollen gel-like crosslinked copolymer. After washing, 30 g of the water-swollen gel-like crosslinked copolymer was put in a stainless steel sealed tube having a capacity of 50 ml and heat-treated in an oil bath kept at each of the temperatures shown in Table 4 for 5 hours. It was then dried to a constant weight in a hot air dryer at 100°C. The physical properties of the resulting semi-transparent pelletized water-swellable crosslinked polymer are shown in Table 4.

The pellets of the copolymer were dipped in water containing a diluted liquid fertilizer (Hogland solution) to obtain a transparent water-swollen gel-like crosslinked copolymer containing the fertilizer. The swollen gel-like crosslinked copolymer (400 ml) was put in a glass bowl with a diameter of 130 mm and a height of 140 mm, and about 10 cm tall seedlings of begonia and saintpaulia were transplanted in the swollen copolymer in the bowl. They were grown in a well sunlit room while occasionally supplying a diluted aqueous solution of the liquid fertilizer. Four months later, these plants were growing in good condition.

EP 0 122 797 B2

TABLE 4

| Example | Composition of the starting solution | | | | | | | Drying temperature (°C) | Properties of the resulting copolymer | |
|---------|------------------------------------|---|---|---|---|---|---|---|---|---|
| | (Meth)acryl-amide (a) | (% by weight) | Crosslinkable monomer (b) | (% by weight) | Radical polymerization initiator | (% by weight) | Water (% by weight) | | Density (g/cm$^3$) | Water swelling ratio (*) |
| 22 | Acrylamide | 98.0 | N,N'-methylene-bisacrylamide | 2.0 | Ammonium persulfate | 0.1 | 900 | 120 | 1.30 | 142 |
| 23 | " | 98.0 | " | 2.0 | " | 0.1 | 900 | 140 | 1.30 | 163 |
| 24 | " | 99.8 | " | 0.2 | " | 0.1 | 900 | 120 | 1.29 | 285 |

(*) When swollen with water, all the copolymers became transparent water-swollen gels.

Example 25

A uniform starting solution having the same composition as in Example 10 was polymerized in the same way as in Example 22, washed in flowing water for 8 hours, and dried at 60°C in a hot air dryer until its water content became 100% of its own weight. Thirty grams of the resulting semi-transparent pelletized water-swollen crosslinked copolymer was put in a 50 ml stainless steel sealed tube, and heat-treated in an oil bath at 140°C for 5 hours. It was then dried in a hot air dryer at 100°C until its weight became constant. The resulting semi-transparent pelletized water-swollen crosslinked copolymer had a density of 1.30 g/cm$^3$ and a water swelling ratio of 121.

The pellets of the copolymer were dipped in water containing a diluted liquid fertilizer (Hogland solution) to obtain a transparent water-swollen gel-like crosslinked copolymer containing the fertilizer. The swollen gel-like crosslinked copolymer (400 ml) was put in a glass bowl with a diameter of 130 mm and a height of 140 mm, and about 10 cm tall seedlings of begonia and saintpaulia were transplanted in the swollen copolymer in the bowl. They were grown in a well sunlit room while occasionally supplying a diluted aqueous solution of the liquid fertilizer. Four months later, these plants were growing in good condition.

Example 26

A uniform starting solution of the same composition as in Example 22 was polymerized in the same way as in Example 22, and then washed in flowing water for 8 hours. Thirty grams of the resulting water-swollen gel-like crosslinked copolymer was put in a 50 ml stainless steel sealed tube, and heat-treated in an oil bath at 90°C for 5 hours, followed by drying to a constant weight in a hot air dryer at 100°C. The resulting semi-transparent pelletized water-swellable crosslinked copolymer had a density of 1.30 g/cm$^3$ and a water swelling ratio of 35.

Example 27

A uniform starting solution having the same composition as in Example 22 was polymerized in the same way as in Example 10, and washed in flowing water for 8 hours. Thirty grams of the resulting water-swollen gel-like crosslinked copolymer was put in a 50 ml stainless steel sealed tube, and heat-treated in an oil bath at 180°C for 5 hours. The polymer consequently became water-soluble and could not be used for the intended application.

Example 28

Acrylamide (88 g), 3 g of acrylic acid and 2.0 g of N,N-methylene-bisacrylamide were dissolved in 900 g of water and 0.1 g of ammonium persulfate was dissolved to form a uniform solution. The solution was continuously fed into a tubular polymerization device of Teflon® having an inside diameter of 7 mm and a length of 300 mm, and polymerized at 90°C for 8 minutes. The resulting water-swollen gel-like crosslinked copolymer in the form of a strand having a diameter of 7 mm was continuously cut to a length of 7 mm. The resulting water-swollen gel-like crosslinked copolymer was washed in flowing water for 8 hours to remove the monomers remaining in the copolymer. After washing, 30 g of the water-swollen gel-like crosslinked copolymer was put in a 50 ml stainless steel sealed tube and heat-treated in an oil bath at 120°C for 1 hour, and then dried in a hot air dryer at 60°C for 48 hours.

The resulting semitransparent pelletized water-swellable crosslinked polymer had a water swelling ratio of 150.

Example 29

A uniform starting solution of the same composition as in Example 10 was polymerized in the same way as in Example 10, washed in flowing water for 8 hours, and dried in a hot air dryer at 60°C for 48 hours. The resulting semitransparent pelletized water-swollen crosslinked copolymer had a water swelling ratio of 80.

**Claims**

1.  A process for producing a granular, water-swellable crosslinked acrylic copolymer, which comprises copolymerizing in an aqueous medium in the presence of a radical polymerization initiator a monomeric mixture comprising (a) at least one acrylic amide monomer selected from acrylamide, methacrylamide and N-methyl substitution products of these amides and (b) at least one acrylic crosslinkable comonomer selected from N,N'-alkylene or arylene-bisacrylamides, N,N'-alkylene- or (C6) arylene bismethacrylamides, alkylene-bisacrylates, alkylene-bismethacrylates, alkylene glycol-bisacrylates, polyalkylene glycolbisacrylates, alkylene glycol-bismethacrylates and polyalkylene glycol-bismethacrylates, the proportion of the comonomer (b) being 0.01 to 5 moles per 100 moles of the acrylic amide monomer (a), forming a granular copolymer and drying the resulting granular copolymer characterised by (i) drying the resulting granular polymer at a temperature of 105 to 150°C, or (ii) heat-treating the resulting granular copolymer in the presence of moisture under substantially sealed conditions at a temperature of 100 to 160°C.

2. A process according to claim 1 wherein the granular water-swellable crosslinked acrylic copolymer has a water swelling ratio of at least 65.

3. A process according to claim 1 or 2 wherein the resulting granular copolymer is (i) dried at 110 to 150°C, or (ii) heat-treated at 110 to 150°C in the presence of moisture under substantially sealed conditions.


**Patentansprüche**

1. Verfahren zur Herstellung eines körnigen, mit Wasser quellbaren, vernetzten Acrylcopolymeren, bei dem in einem wäßrigen Medium in Gegenwart eines Initiators für die radikalische Polymerisation ein Monomerengemisch copolymerisiert wird, das aus (a) mindestens einem monomeren Acrylamid, ausgewählt aus Acrylamid, Methacrylamid und N-Methyl-Substitutionsprodukten dieser Amide, und aus (b) mindestens einem vernetzbaren Acryl-Comonomeren, ausgewählt aus N,N'-Alkylen- oder -Arylenbisacrylamiden, N,N'-Alkylen- oder -(C6)Arylen-bismethacrylamiden, Alkylen-bisacrylaten, Alkylenbismethacrylaten, Alkylenglykolbisacrylaten, Polyalkylenglykol - bisacrylaten, Alkylenglykolbismethacrylaten und Polyalkylenglykolbismethacrylaten besteht, wobei der Anteil des Comonomeren (b) 0,01 bis 5 mol je 100 mol des monomeren Acrylamids (a) beträgt, ein körniges Copolymer erzeugt und das erhaltene körnige Copolymer getrocknet wird, dadurch gekennzeichnet, daß man (i) das erhaltene körnige Polymer bei einer Temperatur von 105 bis 150°C trocknet oder (ii) das erhaltene körnige Copolymer in Gegenwart von Feuchtigkeit unter im wesentlichen luftdichten Bedingungen bei einer Temperatur von 100 bis 160°C wärmebehandelt.

2. Verfahren nach Anspruch 1, dadurch gekennzeichnet, daß das körnige, mit Wasser quellbare, vernetzte Acrylcopolymer ein Wasser-Quellverhältnis (...vermögen) von mindestens 65 aufweist.

3. Verfahren nach Anspruch 1 oder 2, dadurch gekennzeichnet, daß das erhaltene körnige Copolymer (i) bei 110 bis 150°C getrocknet oder (ii) bei 110 bis 150°C in Gegenwart von Feuchtigkeit unter im wesentlichen luftdichten Bedingungen wärme-behandelt wird.


**Revendications**

1. Procédé pour la préparation d'un copolymère acrylique réticulé, granulaire, susceptible de gonfler dans l'eau, lequel comprend la copolymérisation, dans un milieu aqueux, en présence d'un amorceur de polymérisation radicalaire, d'un mélange de monomères comprenant (a) au moins un monomère de type amide acrylique, choisi parmi l'acrylamide, le méthacrylamide et des produits de méthylation à l'azote de ces amides, et (b) au moins un comonomère acrylique réticulable, choisi parmi des N,N'-alkylène- ou -arylène-bisacrylamides, des N,N'-alkylène- ou -arylène-(en C6)-bis-méthacrylamides, des alkylène-bisacrylates, des alkylène-bisméthacrylates, des alkylène-glycol-bisacrylates, des poly(alkylène-glycol)-bisacrylates, des alkylène-glycol-bisméthacrylates et des poly(alkylène-glycol)-bisméthacrylates, la proportion du comonomère (b) allant de 0,01 à 5 moles pour 100 moles du monomère de type amide acrylique (a), la formation d'un copolymère granulaire et le séchage du copolymère granulaire résultant, caractérisé par (I) le séchage du polymère granulaire résultant, à une température de 105-150°C, ou (II) le traitement par la chaleur du copolymère granulaire résultant, en présence d'humidité, en récipient essentiellement clos hermétiquement, à une température de 100 à 160°C.

2. Procédé selon la revendication 1, dans lequel le copolymère acrylique réticulé granulaire, susceptible de gonfler dans l'eau, a un rapport de gonflement dans l'eau d'au moins 65.

3. Procédé selon la revendication 1 ou 2, dans lequel le copolymère granulaire résultant est (I) séché à 110-150°C, ou (II) traité par la chaleur à 110-150°C en présence d'humidité, en récipient essentiellement clos hermétiquement.